# EUROPÄISCHE PATENTSCHRIFT

(11) **EP 2 828 342 B1**
(45) Veröffentlichungstag und Bekanntmachung des Hinweises auf die Patenterteilung: **02.03.2016**
(21) Anmeldenummer: 13707556.0
(22) Anmeldetag: 05.03.2013
(51) Int. Cl.: C09C 1/00, C08K 3/00, H01B 3/02, C09K 5/14, H01B 19/04

(54) **THERMISCH LEITFÄHIGES, PLÄTTCHENFÖRMIGES UND MIT ALUMINIUMOXID BESCHICHTETES PIGMENT**
THERMALLY CONDUCTIVE, PLATE-SHAPED PIGMENT COATED WITH ALUMINIUM OXIDE
PIGMENT THERMO-CONDUCTEUR, EN FORME DE PAILLETTES ET REVÊTU D'OXYDE D'ALUMINIUM

(30) Priorität: 23.03.2012 DE 102012005754
(43) Veröffentlichungstag der Anmeldung: 28.01.2015
(73) Patentinhaber: Merck Patent GmbH, 64293 Darmstadt (DE)
(72) Erfinder: RUEGER, Reinhold, 63322 Roedermark (DE); KUNTZ, Matthias, 64342 Seeheim-Jugenheim (DE)
(86) Internationale Anmeldenummer: PCT/EP2013/000642
(87) Internationale Veröffentlichungsnummer: WO 2013/139435

(56) Entgegenhaltungen:
- WO-A1-2008/036151
- WO-A1-2011/010291
- JP-A- 2002 256 147
- JP-A- 2010 053 350

## Beschreibung

Die vorliegende Erfindung betrifft Pigmente, insbesondere thermisch leitfähige Pigmente, die aus einem plättchenförmigen Substrat und einer darauf befindlichen Aluminiumoxid- und/oder Aluminiumoxidhydratschicht bestehen, eine thermisch leitfähige Zusammensetzung, enthaltend diese Pigmente, sowie die Verwendung der genannten Pigmente und der Zusammensetzung, insbesondere zur Isolierung von elektrischen Hochspannungsmaschinen.

Elektrische Maschinen und Anlagen, insbesondere elektrische Hochspannungsmaschinen, in denen Starkströme fließen, wie Generatoren, Statorbleche, Rotoren oder Kabelbündel, um nur einige zu nennen, müssen gegen Spontanentladungen zuverlässig geschützt werden. Gleichzeitig ist es erforderlich, die beim Betrieb entstehende Wärme auf möglichst direkte Weise kostengünstig abzuführen um das Leistungsvermögen der Anlage voll ausnutzen zu können. Daher werden Anlagen dieser Art mit aufwändigen Isolationsschichten versehen, die gleichzeitig mit einer indirekten Kühlung, wie beispielsweise einer Kühlung im Kühlgas- oder Luftstrom, kombiniert werden. Da die Leistungen der Hochspannungsmaschinen ständig erhöht werden, steigt die Wärmeentwicklung der Anlage und damit die Anforderungen an hochleistungsfähige Materialien für die Isolationsschichten, die idealerweise sowohl elektrische Isolierung als auch Wärmeabfuhr ermöglichen.

Es wird daher beständig nach Methoden gesucht, die Wärmeleitfähigkeit der verwendeten Isolationsschichten zu verbessern, um auch bei sehr kompakten elektrischen Leitungspaketen die entstehende Wärme über eine einfache Luft- bzw. Kühlgaskühlung abführen zu können.

Zum Zwecke der Isolierung von Hochspannungsmaschinen wurden bislang neben puren isolierenen Polymeren oder Polymeren, die Füllstoffe enthalten, auch so genannte Glimmerpapiere eingesetzt, bei denen Glimmerpartikel auf Trägermaterialien so arrangiert werden können, dass durch Adhäsionskräfte ein papierartiges Gebilde entsteht, welches vom Trägermaterial abgelöst und in Form von streifenförmigen Materialien, so genannten Isolierbändern, für isolierende Wicklungen eingesetzt werden kann. Diese Glimmerpapiere können mit Glasfasergeweben oder anderen Materialien mechanisch stabilisiert sein und bei ihrem späteren Einsatz mit Kunstharzen imprägniert werden.

Glimmer ist ein dielektrisches Material, welches in Partikelform auf Grund seiner hohen elektrischen Durchschlagsfestigkeit besonders gut für die Isolierung von Hochspannungsleitern verwendet werden kann, aber über eine sehr geringe Wärmeleitfähigkeit verfügt.

Es hat daher nicht an Versuchen gefehlt, die Wärmeleitfähigkeit von derartigen Isolierungsschichten zu verbessern.

Im Wesentlichen bestehen Isolierungsschichten für Hochspannungsanlagen entweder aus den bereits genannten mehrlagigen dielektrischen Packungen aus Glimmerpapier, aus ebensolchen Packungen, die nach erfolgter Umhüllung der zu isolierenden Anlagenteile mit einer Harzmasse umgossen und damit imprägniert werden, woraufhin letztere zu einem Kompaktkörper verfestigt wird, aus einer direkten Beschichtung, ähnlich einer Lackierung, auf der Oberfläche der betroffenen Anlagenteile, oder aus einer kompakten füllstoffhaltigen Harzmasse, die in verfestigter Form die zu isolierenden Teile umschließt.

In jede dieser Ausführungsformen lassen sich Zusatzstoffe einbringen, die die Wärmeleitfähigkeit der gesamten Isolierung verbessern.

So ist beispielsweise aus der DE 197 18 385 A1 eine Beschichtung für Bauelemente von elektrischen Maschinen bekannt, die aus einem Lack besteht, der wärmeleitfähige Zusätze enthält, beispielsweise Partikel aus Bornitrid, Aluminiumnitrid, Siliziumnitrid, Aluminiumoxid, Magnesiumoxid, und/oder Siliziumcarbid.

In WO 2008/091489 A1 wird ein Isolierband in Form eines modifizierten Glimmerpapiers beschrieben, welches neben Glimmerplättchen hexagonales Bornitrid mit Partikelgrößen bis zu 1 µm und gegebenenfalls noch weitere thermisch leitfähige Materialien enthält.

Aus WO 2005/123867 ist eine anorganisch/organische, harzbasierende Zusammensetzung bekannt, die die zu isolierenden Teile als zusammenhängender Formkörper einschließt und thermisch leitfähige Füllstoffe enthält, die eine Länge von bis zu 1 µm sowie ein Aspektverhältnis von 3-100 aufweisen.

Auch in der WO 2008/042076 wird eine thermisch leitfähige Harzzusammensetzung beschrieben, die als Füllstoffe thermisch leitfähige Materialien umfasst, die eine Partikellänge von bis zu 1 µm aufweisen und jeweils von einer Harzhülle umgeben sind.

JP2002 256 147 A offenbart wärmeleitfähige Polyphenylensulfidharze, die eine Mischung aus Aluminiumoxid und einem plättchenförmigen Füllstoff enthalten.

JP2010053350 A offenbart wärmeleitfähige Polyarylensulfidharze, die eine Mischung aus einem granularen und einem plättchenförmigen Füllstoff enthalten. WO2011 010291 A offenbart wärmeleitfähige Polyphenylensulfidharze, die eine Mischung aus Magnesiumoxid und einem Füllstoff, dessen aspect ratio grösser 5 ist, enthalten.

Den oben beschriebenen Anwendungen, die neben Glimmer noch wärmeleitfähige Partikel enthalten, ist gemein, dass beide Partikelarten sich entweder statistisch verteilt in der Zusammensetzung befinden, was je nach aktueller Zusammensetzung der Gesamtkomposition den Wirkungsschwerpunkt entweder auf die Wärmeleitfähigkeit oder die dielektrische Isolierung legt, oder dass sich Glimmer und wärmeleitfähige Zusatzstoffe in verschiedenen Schichten der Gesamtisolierung befinden, was die Herstellung der Isolierungsschichten erschwert und verteuert.

Es wäre daher wünschenswert, einen wärmeleitfähigen Zusatzstoff für isolierende Zusammensetzungen zu finden, welcher auf einfache Weise hergestellt werden kann, in den üblichen Isolierungszusammensetzungen verschiedenen Aufbaus einsetzbar ist und sowohl dielektrische als auch wärmeleitende Eigenschaften in einem ausgewogenen Verhältnis aufweist.

Aufgabe der vorliegenden Erfindung ist es daher, einen thermisch leitfähigen Zusatzstoff zur Verfügung zu stellen, welcher in verschiedenen Ausführungsformen von Isolierungen, insbesondere für Hochspannungsmaschinen, variabel einsetzbar ist, gleichermaßen über dielektrische Eigenschaften bei hoher elektrischer Durchschlagsfestigkeit sowie über eine gute thermische Leitfähigkeit verfügt, als Ersatz für den bisher verwendeten Glimmer dienen kann und außerdem über ein einfaches Verfahren kostengünstig herstellbar ist.

Eine weitere Aufgabe der Erfindung besteht darin, ein Verfahren zur Herstellung eines solchen Zusatzstoffes zur Verfügung zu stellen.

Darüber hinaus besteht die Aufgabe der vorliegenden Erfindung darin, eine thermisch leitfähige Zusammensetzung, insbesondere für den Einsatz zu Isolierungszwecken, zur Verfügung zu stellen und die Verwendung des thermisch leitfähigen Zusatzstoffes aufzuzeigen.

Die Aufgabe der vorliegenden Erfindung wird gelöst durch ein thermisch leitfähiges Pigment, welches aus einem plättchenförmigen, dielektrischen Substrat und einer darauf befindlichen Schicht, die mindestens 80 Gew. %, bezogen auf die Gesamtmasse der Schicht, Aluminiumoxid und/oder Aluminiumoxidhydrat enthält, besteht.

Die Aufgabe der Erfindung wird auch gelöst durch ein Verfahren zur Herstellung eines thermisch leitfähigen Pigmentes, bei dem ein plättchenförmiges, dielektrisches Substrat mit einer Schicht, die zu mindestens 80 Gew. %, bezogen auf die Gesamtmasse der Schicht, aus Aluminiumoxidhydrat besteht, beschichtet und anschließend kalziniert wird. Gleichermaßen wird die Aufgabe der vorliegenden Erfindung gelöst durch eine thermisch leitfähige Zusammensetzung, die das genannte thermisch leitfähige Pigment enthält.

Die Aufgabe der vorliegenden Erfindung wird ebenso gelöst durch die Verwendung des genannten thermisch leitfähigen Pigmentes als Füllstoff in Farben, Lacken, Kunststoffen, Harzzusammensetzungen, keramischen Materialien und Gläsern, insbesondere zur Isolierung von elektrischen Hochspannungsmaschinen.

Das thermisch leitfähige Pigment gemäß der vorliegenden Erfindung weist ein plättchenförmiges, dielektrisches Substrat auf. Als Substrate eignen sich insbesondere natürliche oder synthetische Glimmerplättchen, Al₂O₃-Plättchen, SiO₂-Plättchen, Glasplättchen, Borosilikatplättchen, Serecit-Plättchen, Kaolin-Plättchen, Talk-Plättchen oder deren Gemische.

Besonders bevorzugt sind natürliche oder synthetische Glimmerplättchen und Al₂O₃-Plättchen, weil diese eine hohe elektrische Durchschlagsfestigkeit aufweisen und bei Al₂O₃-Plättchen zusätzlich noch die Möglichkeit besteht, kleine und sehr dünne Ausgangsplättchen mit Hilfe der nachfolgenden Beschichtung zu größeren plättchenförmigen Aggregaten zu verbinden.

Als plättchenförmig im Sinne der vorliegenden Erfindung wird ein flaches Gebilde angesehen, welches mit seiner Ober- und Unterseite zwei annähernd parallel zueinander stehende Oberflächen aufweist, deren Ausdehnung in Länge und Breite die größte Ausdehnung des Pigmentes darstellt. Der Abstand zwischen den genannten Oberflächen, der die Dicke des Plättchens darstellt, weist dagegen eine geringere Ausdehnung auf.

Die Ausdehnung aller genannten Substrate für die erfindungsgemäßen Pigmente in Länge und Breite liegt im Bereich von 2 bis 1000 µm, vorzugsweise von 10 bis 400 µm, und insbesondere von 15 bis 100 µm. Sie stellt auch den Wert dar, der gewöhnlich als Teilchengröße der Substrate bezeichnet wird. Diese ist als solche nicht kritisch, allerdings sind größere Teilchengrößen der Substrate innerhalb der genannten Bereiche bevorzugt. Die Dicke der Substrate beträgt in der Regel zwischen 0,05 und 5 µm, vorzugsweise von 0,1 bis 4,5 µm und besonders bevorzugt von 0,2 bis 1 µm.

Die Substrate weisen ein Aspektverhältnis (Verhältnis von Länge zu Dicke) von mindestens 2, bevorzugt von mindestens 10 und besonders bevorzugt von mindestens 50 auf.

Substrate dieser Art sind kommerziell verfügbar und werden von verschiedenen Herstellern als Füllstoffe oder aber auch als Substrate für Effektpigmente angeboten oder hergestellt.

Die als Substrate eingesetzten SiO₂-Plättchen sind beispielsweise auch nach dem in der WO 93/08237 beschriebenen Bandverfahren, mit einer Wasserglaslösung als Ausgangsmaterial, herstellbar.

Aluminiumoxidplättchen werden bevorzugt in Form von Einkristallen verwendet, welche nach dem in EP 763 573 B1 beschriebenen Verfahren, dort als Substrate für Effektpigmente beschrieben, herstellbar sind und neben Aluminiumoxid geringe Anteile von Dotierstoffen wie beispielsweise TiO₂ im Kristall enthalten können.

Die vorab genannte Teilchengröße der Substrate bezieht sich auf den d₉₀-Wert bei einer volumengewichteten Messung mittels Laserbeugung, welche beispielsweise mit einem Mastersizer 2000 der Firma Malvern bestimmt werden kann. Die oben genannten Werte stimmen mit der Teilchengröße der erfindungsgemäßen Pigmente praktisch überein, da diese auf Grund der lediglich geringen Schichtdicke der auf den Substraten befindlichen Schicht ebenfalls in den genannten Bereich fällt. Insbesondere kann die Teilchengröße der erfindungsgemäßen Pigmente, die auf Substraten aus Glimmer oder Al₂O₃ basieren, bis auf einen Wert von 1000 µm ansteigen.

Die mittlere Teilchengröße d₅₀, welche ebenso mittels der vorab genannten Laserbeugungsmethode bestimmt werden kann, liegt sowohl für die eingesetzten Substrate als auch für die erfindungsgemäßen thermisch leitfähigen Pigmente im Bereich von 5 bis 400 µm, insbesondere von 15 bis 300 µm.

Auf der Oberfläche des plättchenförmigen, dielektrischen Substrates befindet sich erfindungsgemäß eine Schicht, die mindestens 80 Gew. %, insbesondere mindestens 90 Gew. % und bevorzugt mindestens 95 Gew. %, bezogen auf die Gesamtmasse der Schicht, Aluminiumoxid und/oder Aluminiumoxidhydrat enthält. Der Anteil an Aluminiumoxid und/oder Aluminiumoxidhydrat in der Schicht kann auch 100% betragen, bezogen auf die Gesamtmasse der Schicht. Dabei ergibt sich der Anteil an Aluminiumoxidhydrat über das bevorzugte Herstellungsverfahren der erfindungsgemäßen Pigmente, bei dem zunächst Aluminiumoxidhydrat auf den plättchenförmigen, dielektrischen Substraten aufgebracht wird, welches anschließend in einem Kalzinierungsverfahren in Aluminiumoxid überführt wird. Da die Kalzinierung der Schicht nicht immer zu einer 100%-igen Überführung der gesamten Schicht in Aluminiumoxid führt, ergibt sich gegebenenfalls ein Anteil an Aluminiumoxidhydrat in der Schicht. Der Aluminiumoxid/-oxidhydrat-Anteil der Schicht besteht also aus Aluminiumoxid oder aus Aluminiumoxid und Aluminiumoxidhydrat. Vorzugsweise ist der Anteil an Aluminiumoxidhydrat in der Schicht jedoch nicht größer als 50%, insbesondere nicht größer als 20% und besonders bevorzugt nicht größer als 5%, bezogen auf den Gesamtgehalt an Aluminiumoxid und Aluminiumoxidhydrat in der Schicht.

Neben Aluminiumoxidhydrat und Aluminiumoxid können in der Schicht auf dem plättchenförmigen, dielektrischen Substrat noch weitere Metalloxide oder Metalloxidhydrate enthalten sein, welche die Wärmeleitfähigkeit des erfindungsgemäßen Pigmentes verbessern, das Aufbringen der Aluminium-Ionen haltigen Schicht erleichtern oder deren Haftung am Substrat erhöhen sollen. Der Anteil dieser weiteren Metalloxide oder Metalloxidhydrate beträgt dabei bis zu 20 Gew. %, insbesondere 0,1 bis 10 Gew. %, vorzugsweise 0,1 bis 5 Gew. %, jeweils bezogen auf die Gesamtmasse der Schicht. Beispielsweise können Magnesiumoxid (MgO), Chromoxid (Cr₂O₃) oder Siliziumoxid (SiO₂) in den genannten Anteilen in der Schicht enthalten sein, bevorzugt werden Magnesiumoxid und Siliziumoxid eingesetzt. Besonders bevorzugt ist ein Anteil von MgO.

Insgesamt besteht das erfindungsgemäße thermisch leitfähige Pigment aus 30 bis 90 Gew. % Substrat und 10 bis 70 Gew. % Aluminiumoxid und/oder Aluminiumoxidhydrat enthaltender Schicht, wobei die Summe aus Substrat und Schicht 100 Gew. % beträgt.

Innerhalb der genannten Grenzen kann die Zusammensetzung variieren, bevorzugt ist ein Anteil von 40 bis 60 Gew. % Substrat und 60 bis 40 Gew. % Schicht.

Gegenstand der Erfindung ist auch ein Verfahren zur Herstellung eines thermisch leitfähigen Pigmentes, bei dem ein plättchenförmiges, dielektrisches Substrat mit einer Schicht, die zu mindestens 80 Gew. %, bezogen auf die Gesamtmasse der Schicht, aus Aluminiumoxidhydrat besteht, beschichtet und anschließend kalziniert wird.

Als plättchenförmige Substrate werden die vorab bereits genannten Substrate in den entsprechenden Größenverhältnissen eingesetzt.

Die Aluminiumoxidhydrat-Schicht wird aus geeigneten Vorstufen von Aluminiumsalzen und ggf., wie vorab bereits beschrieben, weiteren Metallsalzen, vorzugsweise nasschemisch und aus anorganischen Ausgangsstoffen , insbesondere aus Halogeniden, Nitraten, Sulfaten, Phosphaten oder Oxalaten der entsprechenden Metalle, hergestellt. Besonders bevorzugt werden Halogenide eingesetzt, insbesondere Chloride. Besonders bevorzugt werden Aluminiumchlorid oder Aluminiumchlorid und Magnesiumchlorid eingesetzt.

Solche Verfahren sind an sich bereits bekannt. Bei der Nassbeschichtung werden die Substrate in Wasser suspendiert und mit einem oder ggf. mehreren hydrolysierbaren Metallsalzen bei einem für die Hydrolyse geeigneten pH-Wert versetzt. Dabei wird der pH-Wert so ausgewählt, dass vorzugsweise keine Nebenfällungen auftreten und die entsprechenden Metallhydroxide, insbesondere das Aluminiumhydroxid, direkt auf den plättchenförmigen Substraten ausgefällt werden. Der pH-Wert wird dabei in der Regel konstant gehalten, was üblicherweise durch Zugabe einer Säure oder Base geschieht. Nach dem Aufbringen der Aluminiumhydroxid enthaltenden Schicht werden die Pigmente von der Suspension abgetrennt und durch Trocknen dehydratisiert, wobei eine Aluminiumoxidhydratschicht erhalten wird. Anschließend wird das erhaltenen Pigment kalziniert. Die Kalzinierung erfolgt bei Temperaturen von 300 bis 1200°C, bevorzugt bei Temperaturen von 650 bis 950°C. Bei der Kalzinierung erfolgt die vollständige oder zumindest teilweise Umwandlung von Aluminiumoxidhydrat in Aluminiumoxid.

Die Reaktionszeit beträgt in der Regel zwischen 10 Minuten und 4 Stunden, die Kalzinierzeit zwischen 10 Minuten und 2 Stunden.

Die fertige, Aluminiumoxid und/oder Aluminiumoxidhydrat enthaltende Schicht weist eine Schichtdicke von 10 bis 1000 nm, insbesondere von 40 bis 300 nm auf.

Das erfindungsgemäße thermisch leitfähige Pigment besteht vorzugsweise lediglich aus einem plättchenförmigen dielektrischen Substrat und einer einzigen darauf befindlichen Schicht, die mindestens 80 Gew. % Aluminiumoxid oder Aluminiumoxid und Aluminiumoxidhydrat, sowie, ggf., noch weitere Metalloxide oder Metalloxidhydrate, wie oben bereits beschrieben, enthält.

Dabei handelt es sich insbesondere um die folgenden Zusammensetzungen:
Substrat - Aluminiumoxid
Substrat - Aluminiumoxid + bis zu 20 Gew. % MgO
Substrat - Aluminiumoxid + bis zu 20 Gew. % SiO₂
Substrat - Aluminiumoxid + Aluminiumoxidhydrat
Substrat - Aluminiumoxid + Aluminiumoxidhydrat + bis zu 20 Gew. % MgO
Substrat - Aluminiumoxid + Aluminiumoxidhydrat + bis zu 20 Gew. % SiO₂

Bevorzugt sind die Zusammensetzungen:
Glimmerplättchen - Aluminiumoxid
Glimmerplättchen - Aluminiumoxid + bis zu 20 Gew. % MgO
Glimmerplättchen - Aluminiumoxid + bis zu 20 Gew. % SiO₂
Glimmerplättchen - Aluminiumoxid + Aluminiumoxidhydrat
Glimmerplättchen - Aluminiumoxid + Aluminiumoxidhydrat + bis zu 20
Gew.% MgO
Glimmerplättchen - Aluminiumoxid + Aluminiumoxidhydrat + bis zu 20 Gew. % SiO₂
sowie
Al₂O₃-Plättchen - Aluminiumoxid
Al₂O₃-Plättchen - Aluminiumoxid + Aluminiumoxidhydrat,
wobei bei letzteren die plättchenförmigen Al₂O₃-Substrate vorzugsweise einkristalline plättchenförmige Substrate darstellen, die beispielsweise nach dem in EP 763 573 B1 beschriebenen Verfahren hergestellt werden können.

Im Gegensatz zu nach anderen Verfahren hergestellten plättchenförmigen Al₂O₃-Substraten weisen solche einkristallinen Substrate eine Korund-Kristallstruktur auf, die sich nach dem Aufbringen der Aluminiumoxid-haltigen Schicht beim Glühen in letzterer fortsetzt, weil das aufgebrachte Aluminiumoxidhydrat, respektive das entstehende Aluminiumoxid, epitaktisch auf dem Substrat aufwächst und daher ebenfalls in diese Kristallstruktur gezwungen wird.

Im Detail wird bei der Beschichtung der Substrate im ersten Schritt wasserhaltiges Aluminiumhydroxid auf den Substraten abgeschieden, welches dann getrocknet und thermisch entwässert wird. Je nach den gewählten Trocknungs- und Glühbedingungen in den nachfolgenden Schritten und abhängig von der Substrat- und Schichtzusammensetzung entstehen in der Schicht Aluminiumoxidhydrate, α- oder γ-Aluminiumoxid oder eine keramische Aluminiumoxidschicht. Ebenso können bei der Abscheidung der Aluminiumhydroxidschicht sehr feinteilige anorganische Partikel, beispielsweise aus Korund, mit gefällt werden, welche dann ebenso in der Schicht enthalten sind.

Aluminiumoxid in der Korundstruktur hat eine höhere Wärmeleitfähigkeit als γ-Aluminiumoxid, welches bei der Auffällung von Aluminiumoxidhydrat auf silikatische Substratmaterialien meist erhalten wird.

Zusätzlich kann bei den einkristallinen Formen wie auch bei allen anderen Aluminiumoxidplättchen als Substratmaterial durch das Aufbringen einer Aluminiumoxid-haltigen Schicht gemäß der vorliegenden Erfindung eine Aggregation von feinteiligen plättchenförmigen Substraten zu größeren Al₂O₃-Pigmenten, welche zu einem sehr hohen Anteil aus Aluminiumoxid bestehen, erzielt werden. Solche Aggregate lassen sich in thermisch leitfähigen Zusammensetzungen gut in der Fläche nebeneinander arrangieren und führen damit zu nahezu zusammenhängenden flächigen Gebilden ähnlich Glimmerpapier, die jedoch über eine hohe Wärmeleitfähigkeit verfügen sowie ein gutes dielektrisches Verhalten bei hoher elektrischer Durchschlagsfestigkeit aufweisen.

Für den Fall, dass das thermisch leitfähige Pigment gemäß der vorliegenden Erfindung für die Einarbeitung in das jeweilige Anwendungsmedium noch einer Oberflächenbehandlung bedarf, bieten sich die für Effektpigmente üblichen Nachbeschichtungsmethoden an, die sich im vorliegenden Falle jedoch auf organische Nachbeschichtungen beschränken sollten, um die Wärmeleitfähigkeit der Pigmente nicht durch eventuell nachteilig wirkende anorganische Nachbehandlungen zu senken. Beispiele für solche organischen Nachbeschichtungen, die der verbesserten Dispergierbarkeit und Adaption der erfindungsgemäßen Pigmente im jeweiligen Anwendungsmedium dienen, finden sich beispielsweise in US 5,759,255, DE 43 17 019, DE 39 29 423, EP 0 492 223, EP 0 141 174, EP 0 764 191 oder EP 0 465 805, deren Offenbarung hiermit unter Bezugnahme mit eingeschlossen ist.

Die vorliegende Erfindung umfasst, je nach Anwendungsmedium, sowohl das thermisch leitfähige erfindungsgemäße Pigment mit als auch ohne organische Nachbeschichtung.

Der Verfahrensschritt der Aufbringung der organischen Beschichtung kann wahlweise direkt an die anderen Schritte des erfindungsgemäßen Verfahrens angeschlossen werden oder auch später erfolgen. Die hierbei aufgebrachten organischen Stoffe umfassen lediglich einen Gewichtsanteil von 0,1 bis 5 Gew. %, vorzugsweise 0,5 bis 3 Gew. %, des gesamten Pigmentes.

Ein weiterer Gegenstand der vorliegenden Erfindung ist eine thermisch leitfähige Zusammensetzung, die ein thermisch leitfähiges Pigment gemäß der vorliegenden Erfindung enthält.

Da das erfindungsgemäße Pigment bedingt durch seine kleinteilige Form sehr variabel eingesetzt werden kann, ist es in praktisch allen bekannten Isolierungszusammensetzungen anwendbar. Dies trifft sowohl auf starre als auch auf flexible, elektrisch isolierende, Zusammensetzungen zu.

Dabei handelt es sich beispielsweise um Isolierbänder, die flexibel sind und die das erfindungsgemäße Pigment in flächiger Anordnung und in hoher Konzentration, die bis zu 95 Gew.%, bezogen auf die Gesamtmasse des primären Isolierbandes betragen kann, enthalten können, wobei das erfindungsgemäße Pigment eine dachziegelartig aufgebaute dichte Schicht bilden kann, die über eine hohe elektrische Durchschlagsfestigkeit und gleichzeitig über eine gute Wärmeleitfähigkeit verfügt.

Solche Isolierbänder werden in der Regel mit Glasfasersubstraten oder anderen geeigneten Substratmaterialien verstärkt um die Bänder fest und ohne Zwischenräume aufwickeln zu können und wahlweise zusätzlich mit Kunststoffharzen getränkt, um den Bändern mechanische Festigkeit bei bestehender Flexibilität zu verleihen.

Bei der erfindungsgemäßen thermisch leitfähigen Zusammensetzung kann es sich jedoch ebenso um eine Direktbeschichtung, vorzugsweise in Form eines Lackes, handeln, bei dem das erfindungsgemäße Pigment in einen üblicherweise verwendeten Lackfirnis eingearbeitet wird, der für die Anwendung auf wärmeerzeugenden Untergründen geeignet ist. Hier lässt sich das erfindungsgemäße Pigment in einer für Lacke üblichen Konzentration von bis zu 40 Gew. %, bezogen auf die Masse des Lackes, einarbeiten.

Darüber hinaus kann das erfindungsgemäße thermisch leitfähige Pigment auch in eine Vergussmasse eingearbeitet werden, die für Isolierzwecke als ausgehärteter Formkörper entweder zusätzlich um die vorab genannten Isolierbänder herum oder aber als einzige Isoliermaßnahme um zu isolierende Maschinenteile herum eingesetzt wird. Die Konzentration des erfindungsgemäßen Pigmentes beträgt hier bis zu 70 Gew.%, bezogen auf die Gesamtmasse der Vergussmasse bzw. des Formkörpers.

Als untere Grenze für den Gehalt an erfindungsgemäßen thermisch leitfähigen Pigmenten werden für alle Anwendungsfälle jeweils 10 Gew. %, bezogen auf das Gewicht der Zusammensetzung, angesehen, da ein geringerer Anteil zu einer nicht ausreichenden thermischen Leitfähigkeit der erfindungsgemäßen Zusammensetzung führen würde.

In jeder der oben genannten thermisch leitfähigen Zusammensetzungen ist es vorteilhaft, das erfindungsgemäße thermisch leitfähige Pigment mit mindestens einem weiteren thermisch leitfähigen Pigment zu kombinieren, welches ausgewählt ist aus der Gruppe bestehend aus Aluminiumoxidpartikeln, Bornitridpartikeln, Borcarbidpartikeln, Carbonitridpartikeln, Aluminiumcarbidpartikeln, Aluminiumnitridpartikeln, Siliciumcarbidpartikeln, Siliciumnitridpartikeln, Magnesiumoxidpartikeln, Berylliumoxidpartikeln und Diamantpartikeln.

Diese Partikel erhöhen die thermische Leitfähigkeit der erfindungsgemäßen Zusammensetzung zusätzlich. Die genannten Partikel sind kommerziell erhältlich und liegen in der Regel feinteilig in Granulatform, sphärischer Form, sphäroider Form, ovaler Form, kubischer Form, Würfelform oder Stäbchenform vor. Sie weisen meist Teilchengrößen von 1 bis 100 µm auf.

Besonders bevorzugt werden die genannten Partikel in sphärischen, sphäroiden, kubischen oder Würfelformen gemeinsam mit den erfindungsgemäßen thermisch leitfähigen Pigmenten in thermisch leitfähigen Zusammensetzungen eingesetzt.

Diese Partikelformen von thermisch leitfähigen Partikeln, in Kombination mit den plättchenförmigen erfindungsgemäßen Pigmenten, führen zu Zusammensetzungen, in denen sich effektive thermische Leitpfade ausbilden können, da die eher isotropen Zusatzstoffe die ggf. vorhandenen Lücken zwischen den plättchenförmigen Pigmenten gut schließen, während die plättchenförmigen Pigmente einen dachziegelartigen Aufbau der entstehenden Pigmentschichten erzeugen, der die positiven dielektrischen Eigenschaften verstärkt. Außerdem können sich plättchenförmige Pigmente in Beschichtungen gut zur Oberfläche hin ausrichten, was wiederum die Ausbildung einer dichten Pigmentschicht bewirkt.

In einer besonders bevorzugten Ausführungsform der vorliegenden Erfindung werden die erfindungsgemäßen thermisch leitfähigen Pigmente in einer thermisch leitfähigen Zusammensetzung in Kombination mit sphärischen, sphäroiden, kubischen oder würfelförmigen Aluminiumoxidpartikeln eingesetzt. Das Mischungsverhältnis von erfindungsgemäßen Pigmenten und sphärischen Aluminiumoxidpartikeln beträgt dabei wenigstens 50:50, bevorzugt jedoch ab 60:40, insbesondere ab 80:20, und kann bis zu 99:1 betragen, wobei sich der größere Anteil jeweils auf das erfindungsgemäße Pigment bezieht.

Eine Besonderheit von Aluminiumoxid besteht, im Gegensatz zu den anderen oben genannten zusätzlichen thermisch leitfähigen Materialien, darin, dass dieses ebenfalls in Plättchenform kommerziell verfügbar ist. Daher wird in einer weiteren bevorzugten Ausführungsform der vorliegenden Erfindung eine thermisch leitfähige Zusammensetzung zur Verfügung gestellt, welche die erfindungsgemäßen thermisch leitfähigen Pigmente sowie zusätzlich unbeschichtete Aluminiumoxidplättchen enthält. Dabei kann es sich um kommerziell verfügbare Aluminiumoxidflakes verschiedener Hersteller handeln. Bevorzugt werden wegen der Korundstruktur jedoch die plättchenförmigen Aluminiumoxideinkristalle eingesetzt, die gemäß EP 763 573 B1 herstellbar sind, wie vorab bereits beschrieben wurde. Hier wird in der thermisch leitfähigen Zusammensetzung im Allgemeinen ein Mischungsverhältnis von wenigstens 30:70, vorzugsweise ab 60:40, insbesondere ab 80:20 und bis zu 99:1, wobei sich der erstgenannte Wert jeweils auf das erfindungsgemäße Pigment bezieht, zwischen erfindungsgemäßen thermisch leitfähigen Pigmenten und plättchenförmigen Aluminiumoxidpartikeln eingehalten.

Zusätzlich zu den erfindungsgemäßen thermisch leitfähigen Pigmenten und den plättchenförmigen Aluminiumoxidpartikeln können auch noch weitere der oben genannten thermisch leitfähigen Pigmente, insbesondere jedoch Aluminiumoxidpartikel in sphärischer, sphäroider, kubischer oder Würfelform, in der erfindungsgemäßen Zusammensetzung eingesetzt werden.

Generell ist das erfindungsgemäße thermisch leitfähige Pigment in der thermisch leitfähigen Zusammensetzung gemäß der vorliegenden Erfindung mit einem Anteil von 10 bis 95 Gew.%, bezogen auf die Gesamtmasse der Zusammensetzung, enthalten. Die jeweils konkreten Anteile des erfindungsgemäßen Pigmentes an der thermisch leitfähigen Zusammensetzung sind abhängig von der Art der jeweiligen Zusammensetzung, dem speziellen Verwendungszweck und der Art und Menge der ggf. zusätzlich eingesetzten weiteren thermisch leitfähigen Partikel, die den Anteil an erfindungsgemäßen Pigmenten im Anwendungsmedium entsprechend reduziert.

Der jeweils für den Anwendungsfall am besten geeignete konkrete Pigmentanteil bzw. das Mischungsverhältnis von erfindungsgemäßen Pigmenten mit weiteren thermisch leitfähigen Pigmenten kann vom entsprechenden Fachmann nach den vorab getätigten Vorgaben ohne erfinderisches Zutun durch einfache Versuche ermittelt werden.

Die weiteren Bestandteile der jeweiligen thermisch leitfähigen Zusammensetzung wie Bindemittel, Lösemittel, Hilfs- und Zusatzstoffe ergeben sich aus den Erfordernissen des speziellen Anwendungsbereichs und sind dem dafür bekannten Stand der Technik entnehmbar.

Ein weiterer Gegenstand der vorliegenden Erfindung ist außerdem die Verwendung des erfindungsgemäßen thermisch leitfähigen Pigmentes sowie der erfindungsgemäßen thermisch leitfähigen Zusammensetzung.

Das thermisch leitfähige Pigment gemäß der vorliegenden Erfindung wird vorzugsweise als Füllstoff in Anwendungsmedien wie Farben, Lacken, Kunststoffen, Harzzusammensetzungen, keramischen Materialien und Gläsern verwendet. Es lässt sich ebenso zur Herstellung von Trockenpräparaten oder in Pigmentpräparationen einsetzen. Es lässt sich in den jeweiligen Anwendungsmedien einzeln oder in Mischungen aus erfindungsgemäßen Pigmenten mit unterschiedlichen Substratmaterialien einsetzen, kann jedoch auch in Mischungen mit anderen thermisch leitfähigen Pigmenten und/oder mit anderen partikulären Zuschlagsstoffen aller Art, die zur Farbgebung oder als funktionelle Zusätze angewendet werden, gemischt eingesetzt werden.

Insbesondere eignet es sich als Füllstoff in den genannten Anwendungsmedien, wenn diese zur Isolierung von elektrischen Hochspannungsmaschinen eingesetzt werden. Daher sind erfindungsgemäße thermisch leitfähige Zusammensetzungen bevorzugt Lacke zur Direktbeschichtung von Maschinenteilen von Hochspannungsmaschinen oder Harzzusammensetzungen, die in Form ausgehärteter Formkörper zur Einhüllung der zu isolierenden Maschinenteile verwendet werden.

Erfindungsgemäße Zusammensetzungen können jedoch auch flexible Isolierbänder darstellen, die einen sehr hohen Pigmentanteil (bis zu 95 Gew. %) und einen nur geringen Bindemittelanteil aufweisen und die durch Glasfaser- oder andere Gewebe mechanisch verstärkt werden können.

Bei den zu isolierenden Hochspannungsmaschinen bzw. deren Teilen handelt es sich beispielsweise um Motoren, Generatoren, Statoren, Rotoren, Spulen oder Kabel, insbesondere Statorenbleche und Kabelbündel, die mit hoher elektrischer Spannung und hoher Stromstärke betrieben werden und daher nicht nur gegen elektrische Durchschläge geschützt werden müssen, sondern auch eine effektive Kühlung benötigen.

Die vorliegenden Pigmente und thermisch leitfähigen Zusammensetzungen, die diese enthalten, weisen, selbstverständlich bei Verwendung geeigneter Bindemittel und Zusatzstoffe, ein dielektrisches Verhalten auf. Des Weiteren ergibt sich durch die plättchenförmige Form der Pigmente in den Anwendungsmedien eine dachziegelartige Ausrichtung der Pigmente, die für eine dichte Barriereschicht aus plättchenförmigen dielektrischen Pigmenten sorgt und damit eine hohe elektrische Durchschlagsfestigkeit der Zusammensetzung garantiert. Bedingt durch die vergleichsweise große Partikelgröße der plättchenförmigen thermisch leitfähigen Pigmente werden insgesamt weniger Pigmentteilchen benötigt um einen effektiven Wärmeabtransport durch Ausbildung von Wärmeleitbahnen zu ermöglichen. Das ist insbesondere in Anwendungsmedien von Bedeutung, in denen der Einsatz von Pigmenten technologiebedingt limitiert ist, beispielsweise bei Lacken.

Weiterhin verfügen sowohl die erfindungsgemäßen thermisch leitfähigen Pigmente als auch die diese Pigmente enthaltenden Zusammensetzungen über eine gute Wärmeleitfähigkeit, die höher ist als die Wärmeleitfähigkeit in üblichen Anwendungen, bei denen statt des erfindungsgemäßen Pigmentes Glimmer eingesetzt wird.

Die vorliegende Erfindung soll anhand der nachstehenden Beispiele genauer beschrieben, jedoch nicht auf diese reduziert werden.

### Beispiel 1:

### Glimmer mit Al₂O₃-Beschichtung

Zu einer Suspension von 100 g Muskovit-Glimmer mit einer mittleren Teilchengröße von 25 µm und einer Dicke von ca. 300 nm in 1 Liter Wasser wird bei 80°C eine Lösung von 468 g AlCl₃*6H₂O und 6 g MgCl₂*6H₂O langsam zudosiert. Der pH-Wert wird mit Natronlauge bei pH 6,5 gehalten. Nach Beendigung der Zugabe wird noch 1 Stunde nachgerührt, anschließend wird das Produkt mit einer Nutsche abfiltriert, mit Wasser gewaschen, bei 120°C getrocknet und danach 30 min bei 850°C geglüht. Man erhält 195 g des Aluminiumoxid-beschichteten Glimmerpigmentes (ca. 50 Gew. % Al₂O₃) als weißes Pulver.

### Beispiel 2:

### Synthetischer Glimmer mit Al₂O₃-Beschichtung

Zu einer Suspension von 100 g synthetischem Glimmer (Fluorophlogopit) mit einer mittleren Teilchengröße von 300 µm und einer Dicke von etwa 5 µm in 1 Liter Wasser wird unter Rühren bei 80°C eine Lösung von 140 g AlCl₃*6H₂O und 2 g MgCl₂*6H₂0 langsam zudosiert. Der pH-Wert wird mit Natronlauge bei pH 6,5 gehalten. Nach Beendigung der Zugabe wird noch 1 Stunde nachgerührt, anschließend wird das Produkt mit einer Nutsche abfiltriert, mit Wasser gewaschen, bei 120°C getrocknet und danach 30 min bei 850°C geglüht. Man erhält 128 g des Aluminiumoxid-beschichteten Glimmerpigmentes (ca. 23 Gew. % Al₂O₃) als weißes Pulver.

### Beispiel 3:

### Aluminiumoxidplättchen mit Al₂O₃-Beschichtung

50 g Aluminiumoxidplättchen, hergestellt nach dem in EP 763 573 beschriebenen Verfahren, mit einer mittleren Teilchengröße von 20 µm und einer mittleren Dicke von 200 nm werden in 1 Liter Wasser suspendiert. Zu dieser Suspension wird unter Rühren bei 80°C eine Lösung von 178 g AlCl₃*6H₂O langsam zudosiert. Der pH-Wert wird mit Natronlauge bei pH 6,5 gehalten. Nach Beendigung der Zugabe wird noch 1 Stunde nachgerührt, anschließend wird das Produkt mit einer Nutsche abfiltriert, mit Wasser gewaschen, bei 120°C getrocknet und danach 30 min bei 800°C geglüht. Es werden 172 g des beschichteten Aluminiumoxidpigmentes erhalten. Das beschichtete Pigment besteht aus plättchenförmigen Aggregaten mit einer mittleren Teilchengröße von ca. 100 µm.

### Beispiele 4-6:

### Mischungen aus den Pigmenten gemäß Beispiel 1-3 mit weiteren thermisch leitfähigen Pigmenten

Jeweils 67 g der Pigmente aus den Beispielen 1-3 werden mit jeweils 33 g eines sphärischen α-Aluminiumoxidpigmentes mit einer mittleren Teilchengröße von 2 µm gemischt. Es werden jeweils 100 g der Mischung erhalten. Beispiel 4: Pigment aus Beispiel 1 + sphärisches α-Aluminiumoxid Beispiel 5: Pigment aus Beispiel 2 + sphärisches α-Aluminiumoxid Beispiel 6: Pigment aus Beispiel 3 + sphärisches α-Aluminiumoxid

### Beispiele 7-13:

### Thermisch leitfähige Isolierungen

Eine Lösung eines Novolak-Epoxidharzes mit Dicyanamid als Härter in Methylketon wird jeweils mit Pigment oder Pigmentmischung gemäß den Beispielen 1 bis 6 versetzt. Der Pigmentanteil beträgt jeweils 50 Gew. %, bezogen auf die Summe der Feststoffanteile von Epoxidharz, Härter und Pigment.

Es werden jeweils Folien hergestellt, indem die Mischungen auf eine 100 µm starke PET-Folie aufgerakelt, bei Raumtemperatur abgelüftet und bei 75°C 30 Minuten getrocknet werden. Die erhaltenen Filme sind jeweils noch klebrig und werden in 12 Lagen übereinander laminiert, wobei jeweils eine beschichtete Folienoberfläche auf die beschichtete Seite einer anderen Folie aufgebracht und die oberen PET-Folien abgezogen werden. Es wird ein zusammenhängendes Schichtpaket von 1 mm Schichtdicke erhalten. Das Schichtpaket wird anschließend von der unteren Folienlage abgenommen und bei 150°C ausgehärtet.

Zum Vergleich wird eine Probe mit reinem Glimmer bei analogem Pigmentanteil hergestellt (Beispiel 13).

An den Proben wird jeweils die Wärmeleitfähigkeit (lambda) durch die Fläche mittels eines Temperaturleitfähigkeitmessgerätes Netzsch LFA 447 *NanoFlash*® mit Xenon-Blitz gemessen.

Die Messergebnisse sind in Tabelle 1 dargestellt.

**Tabelle 1:**

| Beispiel | Pigment | | Wärmeleitfähigkeit lambda in W/m*K bei | | | |
|---|---|---|---|---|---|---|
| Nr. | aus Beispiel | 30°C | 50°C | 70°C | 90°C | 110°C |
| 7 | 1 | 0,3 | 0,35 | 0,4 | 0,4 | 0,39 |
| 8 | 2 | 0,27 | 0,28 | 0,29 | 0,28 | 0,27 |
| 9 | 3 | 0,36 | 0,44 | 0,42 | 0,40 | 0,39 |
| 10 | 4 | 0,38 | 0,40 | 0,42 | 0,43 | 0,43 |
| 11 | 5 | 0,36 | 0,43 | 0,41 | 0,40 | 0,39 |
| 12 | 6 | 0,44 | 0,45 | 0,49 | 0,49 | 0,48 |
| 13 | Vergleich | 0,21 | 0,23 | 0,24 | 0,25 | 0,25 |

Wie die Messergebnisse zeigen, sind alle erfindungsgemäßen Pigmente in einer erfindungsgemäßen Zusammensetzung in Bezug auf ihre Wärmeleitfähigkeit dem reinen Glimmer überlegen. Die Wärmeleitfähigkeit des Komposits lässt sich weiter steigern, wenn dem erfindungsgemäßen thermisch leitfähigen Pigment noch jeweils ein sphärisches Aluminiumoxid beigemischt wird.

## Patentansprüche

1. Thermisch leitfähiges Pigment, bestehend aus einem plättchenförmigen, dielektrischen Substrat und einer darauf befindlichen Schicht, die mindestens 80 Gew. %, bezogen auf die Gesamtmasse der Schicht, Aluminiumoxid und/oder Aluminiumoxidhydrat enthält.

2. Pigment gemäß Anspruch 1, **dadurch gekennzeichnet, dass** das Substrat ausgewählt ist aus der Gruppe bestehend aus natürlichen Glimmerplättchen, synthetischen Glimmerplättchen, Al₂O₃-Plättchen, SiO₂-Plättchen, TiO₂-Plättchen, Glasplättchen, Borosilikatplättchen, Secerit-Plättchen, Kaolin-Plättchen, Talk-Plättchen oder deren Gemischen.

3. Pigment gemäß Anspruch 1 oder 2, **dadurch gekennzeichnet, dass** die Schicht bis zu 20 Gew.%, bezogen auf die Gesamtmasse der Schicht, MgO, Cr₂O₃ oder SiO₂ enthält.

4. Pigment gemäß einem oder mehreren der Ansprüche 1 bis 3, **dadurch gekennzeichnet, dass** das Pigment aus 30 - 90 Gew. % Substrat und aus 10 - 70 Gew. % Aluminiumoxid und/oder Aluminiumoxidhydrat enthaltender Schicht besteht, wobei die Summe aus Substrat und Schicht 100 Gew.% beträgt.

5. Pigment gemäß einem oder mehreren der Ansprüche 1 bis 4, **dadurch gekennzeichnet, dass** es eine mittlere Teilchengröße d₅₀ im Bereich von 5 bis 400 µm aufweist.

6. Verfahren zur Herstellung eines thermisch leitfähigen Pigmentes gemäß einem oder mehreren der Ansprüche 1 bis 5, **dadurch gekennzeichnet, dass** ein plättchenförmiges, dielektrisches Substrat mit einer Schicht, die zu mindestens 80 Gew. %, bezogen auf die Gesamtmasse der Schicht, aus Aluminiumoxidhydrat besteht, beschichtet und anschließend kalziniert wird.

7. Thermisch leitfähige Zusammensetzung, enthaltend ein Pigment gemäß einem oder mehreren der Ansprüche 1 bis 5.

8. Thermisch leitfähige Zusammensetzung gemäß Anspruch 7, **dadurch gekennzeichnet, dass** zusätzlich mindestens ein weiteres thermisch leitfähiges Pigment, ausgewählt aus der Gruppe bestehend aus Aluminiumoxidpartikeln, Bornitridpartikeln, Borcarbidpartikeln, Carbonitridpartikeln, Aluminiumcarbidpartikeln, Aluminiumnitridpartikeln, Siliciumcarbidpartikeln, Siliciumnitridpartikeln, Magnesiumoxidpartikeln, Berylliumoxidpartikeln und Diamantpartikeln, enthalten ist.

9. Thermisch leitfähige Zusammensetzung gemäß Anspruch 8, **dadurch gekennzeichnet, dass** das weitere thermisch leitfähige Pigment aus plättchenförmigen Aluminiumoxidpartikeln besteht.

10. Thermisch leitfähige Zusammensetzung gemäß Anspruch 8 oder 9, **dadurch gekennzeichnet, dass** mindestens ein weiteres thermisch leitfähiges Pigment eine sphärische, sphäroide, ovale oder kubische Form oder eine Würfelform aufweist.

11. Thermisch leitfähige Zusammensetzung gemäß einem oder mehreren der Ansprüche 7 bis 10, **dadurch gekennzeichnet, dass** das Pigment gemäß einem oder mehreren der Ansprüche 1 bis 5 mit einem Anteil im Bereich von 10 bis 95 Gew. %, bezogen auf die Gesamtmasse der Zusammensetzung, in dieser enthalten ist.

12. Thermisch leitfähige Zusammensetzung gemäß einem oder mehreren der Ansprüche 7 bis 11, **dadurch gekennzeichnet, dass** es sich um eine flexible oder starre, elektrisch isolierende, Zusammensetzung handelt.

13. Thermisch leitfähige Zusammensetzung gemäß einem oder mehreren der Ansprüche 7 bis 12, **dadurch gekennzeichnet, dass** es sich bei der Zusammensetzung um ein Isolierband, ein mechanisch stabilisiertes Isolierband, eine Direktbeschichtung oder eine Harz enthaltende Vergussmasse handelt.

14. Verwendung eines Pigmentes gemäß einem oder mehreren der Ansprüche 1 bis 5 als Füllstoff, in Trockenpräparaten oder Pigmentpräparationen.

15. Verwendung eines Pigmentes gemäß einem oder mehreren der Ansprüche 1 bis 5 oder einer Zusammensetzung gemäß einem oder mehreren der Ansprüche 7 bis 13 zur Isolierung von elektrischen Hochspannungsmaschinen.

16. Verwendung gemäß Anspruch 15, **dadurch gekennzeichnet, dass** es sich bei den elektrischen Hochspannungsmaschinen um Motoren, Generatoren, Statoren, Rotoren, Spulen oder Kabel handelt.

## Claims

1. Thermally conductive pigment consisting of a flake-form, dielectric substrate and a layer located thereon which comprises at least 80% by weight, based on the total weight of the layer, of aluminium oxide and/or aluminium oxide hydrate.

2. Pigment according to Claim 1, **characterised in that** the substrate is selected from the group consisting of natural mica flakes, synthetic mica flakes, Al₂O₃ flakes, SiO₂ flakes, TiO₂ flakes, glass flakes, borosilicate flakes, sericite flakes, kaolin flakes, talc flakes or mixtures thereof.

3. Pigment according to Claim 1 or 2, **characterised in that** the layer comprises up to 20% by weight, based on the total weight of the layer, of MgO, Cr₂O₃ or SiO₂.

4. Pigment according to one or more of Claims 1 to 3, **characterised in that** the pigment consists of 30 - 90% by weight of substrate and 10 - 70% by weight of layer comprising aluminium oxide and/or aluminium oxide hydrate, where the sum of substrate and layer is 100% by weight.

5. Pigment according to one or more of Claims 1 to 4, **characterised in that** it has an average particle size d₅₀ in the range from 5 to 400 µm.

6. Process for the preparation of a thermally conductive pigment according to one or more of Claims 1 to 5, **characterised in that** a flake-form, dielectric substrate is coated with a layer which consists of at least 80% by weight, based on the total weight of the layer, of aluminium oxide hydrate and is subsequently calcined.

7. Thermally conductive composition comprising a pigment according to one or more of Claims 1 to 5.

8. Thermally conductive composition according to Claim 7, **characterised in that** at least one further thermally conductive pigment selected from the group consisting of aluminium oxide particles, boron nitride particles, boron carbide particles, carbonitride particles, aluminium carbide particles, aluminium nitride particles, silicon carbide particles, silicon nitride particles, magnesium oxide particles, beryllium oxide particles and diamond particles is additionally present.

9. Thermally conductive composition according to Claim 8, **characterised in that** the further thermally conductive pigment consists of flake-form aluminium oxide particles.

10. Thermally conductive composition according to Claim 8 or 9, **characterised in that** at least one further thermally conductive pigment has a spherical, spheroidal, oval or cubic shape or a cube shape.

11. Thermally conductive composition according to one or more of Claims 7 to 10, **characterised in that** the pigment according to one or more of Claims 1 to 5 is present in the composition with a proportion in the range from 10 to 95% by weight, based on the total weight of the composition.

12. Thermally conductive composition according to one or more of Claims 7 to 11, **characterised in that** it is a flexible or rigid, electrically insulating composition.

13. Thermally conductive composition according to one or more of Claims 7 to 12, **characterised in that** the composition is an insulating tape, a mechanically stabilised insulating tape, a direct coating or a resin-containing casting compound.

14. Use of a pigment according to one or more of Claims 1 to 5 as filler, in dry preparations or pigment preparations.

15. Use of a pigment according to one or more of Claims 1 to 5 or a composition according to one or more of Claims 7 to 13 for the insulation of electrical high-voltage machines.

16. Use according to Claim 15, **characterised in that** the electrical high-voltage machines are motors, generators, stators, rotors, coils or cables.

## Revendications

1. Pigment thermiquement conducteur constitué par un substrat diélectrique sous forme de flocons et par une couche située dessus, laquelle comprend au moins 80% en poids, sur la base du poids total de la couche, d'oxyde d'aluminium et/ou d'hydrate d'oxyde d'aluminium.

2. Pigment selon la revendication 1, **caractérisé en ce que** le substrat est choisi parmi le groupe constitué par des flocons de mica naturel, des flocons de mica synthétique, des flocons d'Al₂O₃, des flocons de SiO₂, des flocons de TiO₂, des flocons de verre, des flocons de borosilicate, des flocons de séricite, des flocons de kaolin, des flocons de talc ou des mélanges afférents.

3. Pigment selon la revendication 1 ou 2, **caractérisé en ce que** la couche comprend jusqu'à 20% en poids, sur la base du poids total de la couche, de MgO, de Cr₂O₃ ou de SiO₂.

4. Pigment selon une ou plusieurs des revendications 1 à 3, **caractérisé en ce que** le pigment est constitué par 30 - 90% en poids d'un substrat et par 10 - 70% en poids d'une couche comprenant de l'oxyde d'aluminium et/ou de l'hydrate d'oxyde d'aluminium, où la somme du substrat et de la couche est de 100% en poids.

5. Pigment selon une ou plusieurs des revendications 1 à 4, **caractérisé en ce qu'**il présente une dimension de particule moyenne d₅₀ dans la plage de 5 à 400 µm.

6. Procédé pour la préparation d'un pigment thermiquement conducteur selon une ou plusieurs des revendications 1 à 5, **caractérisé en ce qu'**un substrat diélectrique sous forme de flocons est revêtu d'une couche qui comprend au moins 80% en poids, sur la base du poids total de la couche, d'hydrate d'oxyde d'aluminium puis est ensuite calciné.

7. Composition thermiquement conductrice comprenant un pigment selon une ou plusieurs des revendications 1 à 5.

8. Composition thermiquement conductrice selon la revendication 7, **caractérisée en ce qu'**au moins un autre pigment thermiquement conducteur choisi parmi le groupe constitué par des particules d'oxyde d'aluminium, des particules de nitrure de bore, des particules de carbure de bore, des particules de carbonitrure, des particules de carbure d'aluminium, des particules de nitrure d'aluminium, des particules de carbure de silicium, des particules de nitrure de silicium, des particules d'oxyde de magnésium, des particules d'oxyde de béryllium et des particules de diamant est de façon additionnelle présent.

9. Composition thermiquement conductrice selon la revendication 8, **caractérisée en ce que** l'autre pigment thermiquement conducteur est constitué par des particules d'oxyde d'aluminium sous forme de flocons.

10. Composition thermiquement conductrice selon la revendication 8 ou 9, **caractérisée en ce qu'**au moins un autre pigment thermiquement conducteur présente une forme sphérique, sphéroïdale, ovale ou cubique ou une forme de cube.

11. Composition thermiquement conductrice selon une ou plusieurs des revendications 7 à 10, **caractérisée en ce que** le pigment selon une ou plusieurs des revendications 1 à 5 est présent dans la composition selon une proportion dans la plage de 10 à 95% en poids, sur la base du poids total de la composition.

12. Composition thermiquement conductrice selon une ou plusieurs des revendications 7 à 11, **caractérisée en ce qu'**il s'agit d'une composition électriquement isolante flexible ou rigide.

13. Composition thermiquement conductrice selon une ou plusieurs des revendications 7 à 12, **caractérisée en ce que** la composition est une bande isolante, une bande isolante stabilisée mécaniquement, un revêtement direct ou un composé de coulée contenant une résine.

14. Utilisation d'un pigment selon une ou plusieurs de revendications 1 à 5 en tant qu'agent de remplissage, dans des préparations sèches ou des préparations de pigments.

15. Utilisation d'un pigment selon une ou plusieurs des revendications 1 à 5 ou d'une composition selon une ou plusieurs des revendications 7 à 13 pour l'isolation de machines électriques haute tension.

16. Utilisation selon la revendication 15, **caractérisée en ce que** les machines électriques haute tension sont des moteurs, des génératrices, des stators, des rotors, des bobines ou des câbles.
